# FASCICULE DE BREVET EUROPEEN

(11) **EP 1 723 002 B1**
(45) Date de publication et mention de la délivrance du brevet: **11.03.2009**
(21) Numéro de dépôt: 05728115.6
(22) Date de dépôt: 23.02.2005
(51) Int. Cl.: B60P 3/00, B65G 49/06

(54) **PROCEDE ET DISPOSITIFS POUR LA RECUPERATION ET LE TRANSPORT DE CALCIN DE VERRE**
VERFAHREN UND VORRICHTUNGEN ZUR RÜCKGEWINNUNG UND ZUM TRANSPORT VON GLASSCHERBEN
METHOD AND DEVICES FOR THE RECOVERY AND TRANSPORT OF GLASS CULLET

(30) Priorité: 03.03.2004 FR 0402184
(43) Date de publication de la demande: 22.11.2006
(73) Titulaire: SAINT-GOBAIN GLASS FRANCE, 92400 Courbevoie (FR)
(72) Inventeur: MCLENAGHAN, Alan, South Duffield Y08 6TA (GB)
(74) Mandataire: Colombier, Christian
(86) Numéro de dépôt international: PCT/FR2005/050120
(87) Numéro de publication internationale: WO 2005/085001

(56) Documents cités:
- EP-A- 0 677 424
- EP-A- 1 072 538
- DE-A- 4 343 466
- DE-U- 8 428 512
- DE-U- 9 313 114
- FR-A- 2 690 144
- PATENT ABSTRACTS OF JAPAN vol. 2002, no. 04, 4 août 2002 (2002-08-04) & JP 2001 335107 A (SAKAKIBARA HIDEO), 4 décembre 2001 (2001-12-04)
- PATENT ABSTRACTS OF JAPAN vol. 2002, no. 07, 3 juillet 2002 (2002-07-03) & JP 2002 087504 A (DAISHOWA PAPER PRODUCTS CO LTD), 27 mars 2002 (2002-03-27)

## Description

La présente invention concerne la récupération de calcin, c'est-à-dire des morceaux de verre cassé, pour l'industrie de fabrication du verre.

On sait d'une part que les verres cassés ou usagés constituent un déchet perturbant pour l'environnement.

On sait d'autre part que les verres cassés ou usagés sont facilement recyclables en étant réintroduits dans les fours de fabrication de verre, et même il est nécessaire d'en introduire un certain pourcentage, de l'ordre de 20 %, dans la composition de sable et autres constituants de base du verre, afin de faciliter la fusion, abaisser la consommation énergétique notamment.

Ceux qui ont des déchets de verre paient pour s'en débarrasser; les industriels fabricants de verre, s'ils ne disposent pas suffisamment de calcin "interne" c'est-à-dire généré dans chacune de leurs usines en achètent à l'extérieur et se le font livrer.

Des réseaux de récupération du calcin ne sont pas vraiment organisés et cela tient au moins en partie à la difficulté de transport de ce calcin, sauf à prévoir un transport dédié et en accepter le coût C'est ainsi que le brevet EP 677424 B1 propose pour transporter du calcin, un véhicule de transport de verre neuf en plaques, ayant en outre un espace de chargement supplémentaire destiné à recevoir au moins une benne pour calcin, notamment disposé à l'avant du véhicule.

Un tel véhicule ainsi modifié constitue un investissement plus important qu'un véhicule classique seulement destiné au transport de plaques de verre.

L'emplacement supplémentaire pour la ou les benne(s) à calcin augmente les dimensions du véhicule et la quantité de calcin transporté reste faible malgré tout.

La présente invention vise un procédé de récupération et de transport de calcin ne nécessitant pas la mise en place d'un circuit de ramassage et de transport supplémentaire spécifique, ne nécessitant pas de véhicule spécial ou modifié, mais au contraire tirant partie sans le compliquer, du circuit existant de livraison et de transport de verre en plaques, donc pratiquement sans contrainte ni coût supplémentaire.

En outre le procédé selon l'invention autorise une récupération d'une quantité importante de calcin, ce qui est bénéfique à la fois pour les industriels fabricants de verre, pour les utilisateurs de verre qui génèrent des déchets de verre, et pour l'environnement.

Egalement le procédé selon l'invention permet une meilleure rentabilisation des transports de verre, les véhicules ne circulant jamais à vide.

Encore, le procédé selon l'invention procure une grande souplesse de mise en oeuvre et s'adapte à des quantités variables de calcin, selon les entreprises concernées.

Plus précisément l'invention propose selon la revendication 1 un procédé de récupération et de transport de déchets, notamment de calcin de verre, consistant à transporter les déchets, notamment le calcin dans des contenants pliables, lesdits contenants étant fournis pliés sur les lieux de récupération et étant transportés ainsi pliés dans les véhicules livrant la matière en plaques, notamment des plaques de verre, et étant rapportés dépliés et pleins de déchets récupérés, dans les véhicules lors de leurs trajets de retour sans matière en plaques, en prenant alors la place que la matière en plaques occupait au trajet aller.

Dans un mode de réalisation les contenants pliables sont des sacs souples, notamment tissés.

Dans le cas de transport de plaques de verre sur des supports adaptés du type chevalets aux trajets aller, les contenants pliés sont logés dans les espaces laissés libres, en particulier dans l'épaisseur libre de la structure des chevalets.

L'invention s'applique au cas des chevalets dits monoversants, c'est-à-dire ceux qui reçoivent des plaques de verre sur un seul de leurs versants, et également du cas des chevalets symétriques qui reçoivent des plaques de verre de chaque côté.

L'invention propose aussi selon la revendication 5 un ensemble de transport de verre neuf en plaques et de calcin de verre, comprenant :
- un véhicule type camion apte à recevoir au moins un chevalet de support de verre en plaques,
- au moins un chevalet,
- au moins un contenant pliable type sac, de dimensions telles que lorsque déplié, il est logeable dans le véhicule à la place du verre en plaques.

L'invention propose également selon la revendication 7 des sacs ou généralement des contenants pliables destinés à être employés pour la récupération du calcin de verre de dimensions adaptées à leur transport dans les véhicules de transport de verre en plaques, sur des chevalets, soit chevalets monoversants, soit chevalets symétriques, équipés en outre de moyens types anses destinés à leur préhension par des moyens de levage mécaniques.

Avantageusement ces sacs, ou plus généralement ces contenants pliables, sont associables à des structures aptes à les maintenir ouverts et debouts pendant leur séjour dans les lieux où est généré le calcin.

L'invention sera maintenant décrite plus en détail en référence aux figures jointes qui représentent :
Figure 1 Une vue schématique de l'arrière d'un véhicule de transport de plaques de verre chargé avec un chevalet à deux versants.
Figure 2 Une vue schématique de l'arrière d'un véhicule de transport de plaques de verre chargé avec un chevalet monoversant.
Figure 3 Une vue schématique de l'arrière d'un véhicule de transport de verre avec un chevalet à deux versants du type de celui montré en figure 1, chargé de contenants remplis de calcin.
Figure 4 Une vue schématique de l'arrière d'un véhicule de transport de verre avec un chevalet monoversant du type de celui montré en figure 2, chargé sur ses deux versants de contenants type sacs, remplis de calcin.
Figure 5 Des sacs du type de ceux montrés en figure 3, montés sur une structure métallique, facilitant leur remplissage.
Figure 6 Un sac du type de ceux montrés en figure 4, montré sur une structure métallique, facilitant son remplissage.

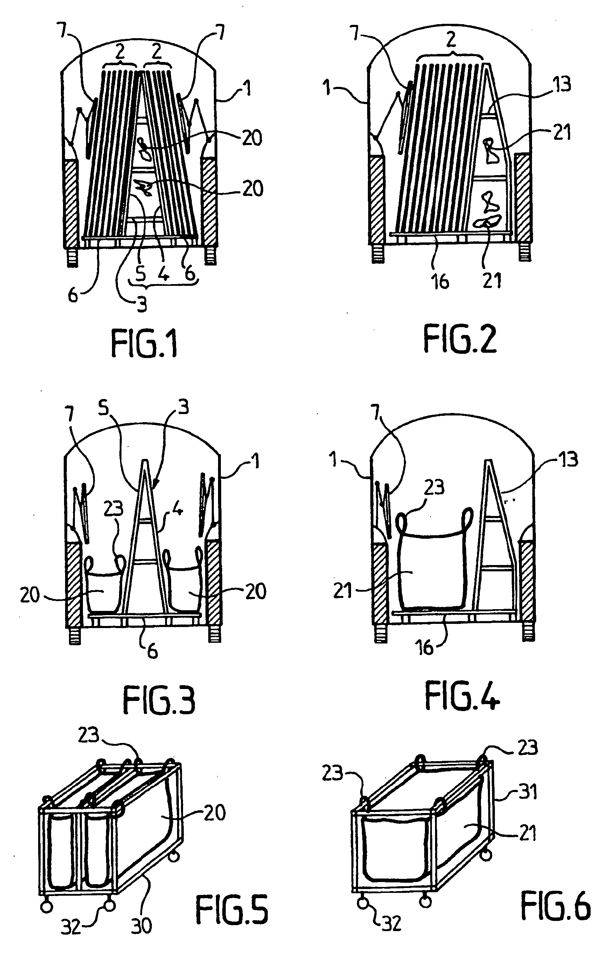

La figure 1 montre une vue arrière schématique de l'intérieur d'un véhicule routier 1, de transport de plaques de verre 2, reposant sur un chevalet 3, ayant une structure symétrique à deux versants 4 et 5 aptes à recevoir des plaques de verre 2. Ces chevalets 3 sont constitués d'un entretoisement de barres métalliques et d'un plancher 6 leur conférant une solidité telle qu'ils peuvent porter plus de 20 tonnes de verre.

Les véhicules 1 sont aussi équipés de moyens de calage tels que 7 des plaques de verre 2, venant s'appliquer sur elles dès que le chevalet 3 est en place dans le véhicule 1.

Les plaques de verre 2 ont généralement des dimensions importantes. Les plus grandes ayant 6 mètres de long sur plus de 3 mètres de large. Bien entendu des dimensions plus faibles sont également possibles ; le mixage de dimensions différentes est lui aussi possible.

La figure 2 montre un autre type de chevalet pouvant transporter des plaques de verre. Il s'agit cette fois d'un chevalet 13, dit monoversant, avec un plancher 16, et apte à recevoir des plaques de verre 2 sur un seul de ses côtés.

Avec une structure de chevalet 3 symétrique l'épaisseur de plaques de verre transportables de chaque côté est de l'ordre de 50 cm ; avec un chevalet du type 13 monoversant, l'épaisseur de plaques de verre est de l'ordre de 1 mètre.

Les véhicules routiers tels que 1 livrent les plaques de verre en étant chargés comme montré sur les figures 1 ou 2.

Pour mettre en oeuvre l'invention, on insère, en particulier dans l'épaisseur des chevalets 3 ou 13, des contenants 20 ou 21, pliés.

Compte tenu de la structure entretoisée desdits chevalets, il est possible de loger une quantité importante de tels contenants 20 ou 21 pliés.

On peut également introduire de tels contenants 20 ou 21 pliés, dans n'importe quel autre emplacement libre du véhicule, hors de la structure entretoisée des chevalets une fois que ledit véhicule est chargé en verre.

Toutefois si ces contenants sont logés à l'intérieur des chevalets, le déchargement desdits contenants se fera sans manipulation supplémentaire en même temps que le déchargement des chevalets de verre.

Dans les circuits de livraison de verre neuf en plaques, il est livré des chevalets 3 ou 13 chargés en verre, et sont repris des chevalets vides, pour retour à l'usine de fabrication des plaques de verre.

Comme montré sur les figures 3 et 4 il est alors possible de charger sur les planchers respectivement 6 et 16 des contenants 20 ou 21, les contenants 20 étant d'une largeur plus faible correspondant à l'espace libre de chaque côté d'un chevalet 3 symétrique jusqu'à la paroi latérale du véhicule 1 soit environ 50 cm pour les véhicules routiers classiques spécialisés, les contenants 21 étant plus larges et adaptés à remplir l'espace entre un chevalet 13 monoversant et la paroi latérale du véhicule 1, soit environ 100 cm pour les véhicules routiers classiques.

Bien entendu dans une largeur de 100 cm il est possible de juxtaposer deux contenants 20 de 50 cm d'épaisseur.

Comme montré sur ces figures 3 et 4 ces contenants sont avantageusement munis d'anses 23 facilitant leur préhension par des moyens de levage mécaniques.

Il est commode d'utiliser comme contenants 20 ou 21 des sacs souples pliables, en un matériau résistant à la charge du calcin, et également aux coupures dudit calcin de verre.

Avantageusement ces sacs 20 ou 21 sont en matériau tissé, par exemple avec des bandes de renfort dont les prolongements forment les anses 23.

Lorsqu'ils sont dépliés, ouverts dans les ateliers générant du calcin, les sacs 20 ou 21 peuvent se tenir seuls. Bien que pliants, la solidité, l'épaisseur de leurs parois, leur confère suffisamment de rigidité. Cependant pour des raisons de sécurité supplémentaire, pour garantir qu'ils sont parfaitement ouverts, pour faciliter leur manutention dans l'atelier, il peut être avantageux de les monter dans un cadre qui garantit qu'ils ne vont pas se coucher et qu'ils vont rester complètement ouverts. Il peut s'agir d'un bac à parois pleines dans lequel ils sont introduits, ou il peut s'agir d'une structure tubulaire à claire-voie 30 ou 31, comme montré sur les figures 5 et 6, éventuellement équipé de roulettes 32 et également de moyens d'attachement desdits sacs 20 ou 21.

Pour charger ces sacs 20 ou 21 quand ils sont pleins, il est possible de venir les monter dans le véhicule 1 après que le chevalet vide 3 ou 13 y ait déjà été introduit, mais de préférence, on charge le chevalet vide avec les sacs 20 ou 21 pleins alors qu'il est toujours dans l'atelier et on charge ensuite l'ensemble des chevalets et des sacs 20 ou 21 pleins, dans le véhicule 1. Avantageusement, pour des raisons de sécurité lors de la manipulation du chevalet 3 ou 13 ainsi chargé, on a procédé à l'arrimage des sacs 20 ou 21 sur le chevalet à l'aide de sangles notamment.

A l'arrivée sur le site la fabrication du verre, les véhicules sont déchargés, les sacs 20 ou 21 peuvent être transportés grâce à leurs anses par des matériels de levage jusqu'au lieu de stockage du calcin. Ils peuvent être vidés par retournement ou être découpés pour que le calcin se déverse.

Avantageusement, on profite de cette récupération dans des contenants 20 ou 21 séparés pour effectuer un tri des différentes sortes de calcin.

Pratiquement sans coût supplémentaire, hormis le coût des sacs, ce qui est très modique, il est ainsi possible de récupérer des quantités importantes de calcin. Par voyage, il est possible de rapporter plusieurs tonnes de calcin, un sac de 1 m³ refermant approximativement une tonne de calcin, et dans la longueur d'un chevalet, six sacs de 1 mètre de longueur pouvant être alignés

En outre bien entendu une superposition étant toujours possible, c'est une dizaine de tonnes de calcin, voire plus, qu'on peut transporter à chaque voyage.

L'invention a été décrite en prenant pour exemple des véhicules routiers de transport, et en se limitant au ramassage de calcin de verre.

Bien entendu la même pratique peut être mise en oeuvre pour des véhicules ferroviaire ou autres et également pour récupérer ou transporter simultanément à des agrès vides qui ont servi à livrer des matériaux neufs, des sacs de matériaux autres que le calcin de verre.

## Revendications

1. Procédé de récupération et de transport de déchets, notamment de calcin de verre, consistant à transporter les déchets, notamment le calcin, dans des contenants (20, 21) pliables, lesdits contenants (20, 21) étant fournis pliés sur les lieux de récupération et étant transportés ainsi pliés dans les véhicules (1) livrant une matière en plaques, notamment des plaques de verre, et étant rapportés dépliés et pleins de déchets récupérés dans les véhicules (1) lors de leur trajet de retour sans matière en plaques, en prenant alors la place que la matière en plaques occupait au trajet aller.

2. Procédé selon la revendication 1 ***caractérisé en ce que*** les contenants pliants (20, 21) sont des sacs souples, notamment tissés.

3. Procédé selon l'une des revendication 1 ou 2, ***caractérisé en ce que*** la - matière en plaques, notamment des plaques de verre, est transportée sur des supports adaptés du type chevalet (3, 13), les contenants pliés (20, 21) étant logés dans les espaces laissés libre, notamment dans l'épaisseur libre de la structure des chevalets (3, 13).

4. Procédé selon la revendication 3 ***caractérisé en ce que*** les supports du type chevalet (3, 13) appartiennent au groupe des chevalets symétriques (3) et des chevalets monoversants (13).

5. Ensemble de transport de verre en plaques et de verre sous forme de calcin comprenant:
- un véhicule apte à recevoir au moins un chevalet de support de verre en plaques,
- au moins un chevalet (3,13),
***caractérisé en ce qu'**il* comprend
- au moins un contenant pliable du type sac (20,21), de dimensions telles qu'il est logeable lorsque déplié, dans le véhicule à la place du verre en plaques.

6. Ensemble selon la revendication 5 ***caractérisé en ce que*** le chevalet appartient au groupe suivant : chevalet monoversant, chevalet symétrique.

7. Ensemble selon l'une des revendications 5 ou 6, **caractérisé en ce que** le contenant est apte à recevoir du calcin de verre, ainsi qu'à la récupération et au transport de calcin de verre et **en ce qu'**il est adapté à la dimension du véhicule et des chevalets supports de verre en plaques, étant de taille telle qu'i! est logeable sur le plancher du chevalent entre la structure dudit chevalet et la paroi du véhicule.

8. Ensemble selon la revendication précédente ***caractérisé en que*** le contenant est un sac muni d'anses (23) pour sa manipulation.

9. Ensemble selon l'une des revendications 7 ou 8 ***caractérisé en que*** le contenant est un sac en un matériau tissé apte à résister à la charge de verre en morceaux lorsqu'il est rempli et aux coupures des morceaux de verre.

10. Ensemble selon l'une des revendications 7 à 9 ***caractérisé en que*** le contenant est un sac montable sur une structure tubulaire le maintenant debout et ouvert pour recevoir le calcin.

## Claims

1. A method of recovering and transporting waste, particularly glass cullet, consisting in transporting the waste, particularly the cullet, in foldable containers (20, 21), said containers (20, 21) being supplied folded to the recovery locations and being transported thus folded in the vehicles (1) delivering a plate material, particularly plates of glass, and being brought back unfolded and full of recovered waste in the vehicles (1) on their return journey without plate material, by then taking the place that the plate material occupied during the outward journey.

2. The method as claimed in claim 1, **characterized in that** the foldable containers (20, 21) are flexible bags, particularly woven.

3. The method as claimed in one of claims 1 or 2, **characterized in that** the plate material, particularly plates of glass, is transported on suitable supports of the trestle type (3, 13), the folded containers (20, 21) being housed in the spaces left vacant, particularly in the vacant thickness of the structure of the trestles (3, 13).

4. The method as claimed in claim 3, **characterized in that** the trestle-type supports (3, 13) belong to the group of symmetrical trestles (3) and single-slope trestles (13).

5. Assembly for the transport of plate glass and of glass in cullet form, comprising:
- a vehicle suitable for receiving at least one trestle for supporting plate glass,
- at least one trestle (3,13),
**characterized in that** it comprises
- at least one foldable bag-type container (20,21), of dimensions such that it can be housed, when unfolded, in the vehicle in place of the plate glass.

6. The assembly as claimed in claim 5, **characterized in that** the trestle belongs to the following group: single-slope trestle, symmetrical trestle.

7. The assembly as claimed in one of claims 5 or 6, **characterized in that** the container is suitable for receiving glass cullet, and for recovering and transporting glass cullet and **in that** it is suited to the dimension of the vehicle and of the trestles supporting plate glass, being of such a size that it can be placed on the floor of the trestle between the structure of said trestle and the wall of the vehicle.

8. The assembly as claimed in the preceding claim, **characterized in that** the container is a bag furnished with handles (23) for its handling.

9. The assembly as claimed in one of claims 7 or 8 **characterized in that** the container is a bag made of a woven material suitable for withstanding the load of glass in pieces when it is full and the cuts of the pieces of glass.

10. The assembly as claimed in one of claims 7 to 9, **characterized in that** the container is a bag that can be mounted on a tubular structure holding it upright and open to receive the cullet.

## Patentansprüche

1. Verfahren für die Rückgewinnung und den Transport von Abprodukten, insbesondere Glasbruch, das darin besteht, die Abprodukte, insbesondere den Glasbruch, in zusammenlegbaren Behältern (20, 21) zu transportieren, die den Rückgewinnungsstätten zusammengelegt bereitgestellt und so zusammengelegt in den Fahrzeugen (1), die ein plattenförmiges Material, insbesondere Glasscheiben, anliefern, transportiert werden und eingesetzt auseinandergefaltet und gefüllt mit den zurückgewonnenen Abprodukten in den Fahrzeugen (1) während deren Rückweg ohne plattenförmiges Material sind, wobei sie dann den Platz einnehmen, den das plattenförmige Material auf dem Hinweg eingenommen hatte.

2. Verfahren nach Anspruch 1, **dadurch gekennzeichnet, dass** die zusammengelegten Behälter (20, 21) insbesondere gewebte nachgiebige Säcke sind.

3. Verfahren nach Anspruch 1 oder 2, **dadurch gekennzeichnet, dass** das plattenförmige Material, speziell die Glasscheiben, auf geeigneten Trägern vom Typ Gestell (3, 13) transportiert wird, wobei die zusammengelegten Behälter (20, 21) von den frei gelassenen Zwischenräumen, insbesondere in der freien Breite des Aufbaus der Gestelle (3, 13), aufgenommen werden.

4. Verfahren nach Anspruch 3, **dadurch gekennzeichnet, dass** die Träger vom Typ Gestell (3, 13) zur Gruppe der symmetrischen Träger (3) und der einseitig schrägen Träger (13) gehören.

5. Vorrichtung für den Transport von Glas als Glasscheiben und in Form von Glasbruch, die:
- ein Fahrzeug, das in der Lage ist, mindestens ein Gestell für das Tragen plattenförmigen Glases aufzunehmen, und
- mindestens ein Gestell (3, 13) umfasst,
**dadurch gekennzeichnet, dass** sie
- mindestens einen zusammenlegbaren Behälter vom Typ Sack (20, 21) mit solchen Abmessungen, dass er, wenn er auseinandergefaltet ist, anstelle des plattenförmigen Glases von dem Fahrzeug aufgenommen werden kann, umfasst.

6. Vorrichtung nach Anspruch 5, **dadurch gekennzeichnet, dass** das Gestell zu der aus einseitig schrägen und aus symmetrischen Trägern bestehenden Gruppe gehört.

7. Vorrichtung nach Anspruch 5 oder 6, **dadurch gekennzeichnet, dass** der Behälter für die Aufnahme von Glasbruch sowie für die Rückgewinnung und den Transport des Glasbruchs geeignet ist, und dass er an die Abmessungen des Fahrzeugs und der Gestelle für das Tragen des plattenförmigen Glases angepasst und von einer derartigen Größe ist, dass er von dem Boden des Gestells zwischen dem Aufbau dieses Gestells und der Fahrzeugwand aufgenommen werden kann.

8. Vorrichtung nach dem vorhergehenden Anspruch, **dadurch gekennzeichnet, dass** der Behälter ein Sack ist, der, um ihn handhaben zu können, mit Schlaufen (23) versehen ist.

9. Vorrichtung nach Anspruch 7 oder 8, **dadurch gekennzeichnet, dass** der Behälter ein Sack aus gewebtem Material ist, das der Belastung durch das stückchenförmige Glas, wenn er gefüllt wird, und den von dem stückchenförmigen Glas ausgehenden Schneidvorgängen widerstehen kann.

10. Vorrichtung nach einem der Ansprüche 7 bis 9, **dadurch gekennzeichnet, dass** der Behälter ein Sack ist, der auf einem röhrenförmigen Aufbau angebracht werden kann, der ihn für die Aufnahme des Glasbruches aufrecht und offen hält.
